# FASCICULE DE BREVET EUROPEEN

(11) **EP 2 103 123 B1**
(45) Date de publication et mention de la délivrance du brevet: **27.07.2016**
(21) Numéro de dépôt: 07857697.2
(22) Date de dépôt: 17.12.2007
(51) Int. Cl.: H04N 21/2347, H04N 21/254, H04N 21/4405, H04N 21/4623, H04N 21/4627, H04N 21/8355

(54) **PROCÉDÉ DE CONTROLE D'ACCES A UN CONTENU NUMERIQUE EMBROUILLE**
VERFAHREN ZUR STEUERUNG DES ZUGANGS ZU EINEM VERWÜRFELTEN DIGITALEN INHALT
METHOD OF CONTROLLING THE ACCESS TO A SCRAMBLED DIGITAL CONTENT

(30) Priorité: 19.12.2006 FR 0655632
(43) Date de publication de la demande: 23.09.2009
(73) Titulaire: Viaccess, 92057 Paris La Défense Cedex (FR)
(72) Inventeur: NEAU, Louis, 35410 Chateaugiron (FR)
(74) Mandataire: Ilgart, Jean-Christophe
(86) Numéro de dépôt international: PCT/EP2007/064067
(87) Numéro de publication internationale: WO 2008/074773

(56) Documents cités:
- EP-A- 1 406 446
- WO-A-03/034313
- WO-A-2005/045554
- WO-A-2006/041590
- US-A1- 2004 177 369
- VAN MOFFAERT A ET AL: "DIGITAL RIGHTS MANAGEMENT: DRM is a key enabler for the future growth of the broadband access market, and the telecom/networking market in general" ALCATEL TELECOMMUNICATIONS REVIEW, ALCATEL, PARIS CEDEX, FR, avril 2003 (2003-04), XP007005930 ISSN: 1267-7167

## Description

L'invention se situe dans le domaine de la protection de contenus et concerne plus spécifiquement un procédé de contrôle d'accès à un contenu numérique embrouillé par une clé secrète K et distribué par un opérateur à au moins un terminal de réception comportant une pluralité de modules de contrôle d'accès, chaque module de contrôle d'accès mettant en oeuvre une technique spécifique de détermination de la clé secrète K, procédé dans lequel le serveur de contenu transmet au terminal le contenu embrouillé, et le serveur de droit transmet au terminal des données de sécurité D(K) préalablement définies en fonction de la clé secrète K.

L'invention concerne également un système de contrôle d'accès à un contenu numérique embrouillé fourni par un opérateur à un terminal de réception comportant une pluralité de modules de contrôle d'accès distincts, chaque module de contrôle d'accès mettant une oeuvre une technique spécifique de détermination de la clé secrète K, ledit système comportant:
- un serveur de contenu comprenant des moyens pour embrouiller le contenu par une clé secrète K,
- un serveur de droit comprenant des moyens pour calculer des données de sécurité D(K) en fonction de la clé secrète K.

L'invention concerne aussi un terminal de réception d'un contenu embrouillé par une clé secrète K fourni par un opérateur, ledit terminal comportant une pluralité de modules de contrôle d'accès distincts chacun mettant en oeuvre une technique spécifique de détermination de ladite clé secrète K, ledit terminal recevant en outre dudit opérateur des données de sécurité D(K) comportant un critère de sélection d'un module de contrôle d'accès parmi la pluralité de modules de contrôle d'accès du terminal pour traiter lesdites données de sécurité D(K).

L'invention concerne enfin un programme d'ordinateur enregistré sur un support et destiné, lorsqu'il est exécuté par un ordinateur, à mettre en oeuvre le procédé selon l'invention.

### ÉTAT DE LA TECHNIQUE ANTÉRIEURE

Plusieurs services distincts tels que par exemple la télévision diffusée (TV live), la vidéo à la demande (VOD pour Video On Demand) ou encore les services d'achat en ligne de programmes audiovisuels, sont exploités par les fournisseurs de contenus pour distribuer des données et/ou des programmes multimédia à des abonnés. Ces services sont déployés sur divers réseaux supports et peuvent être offerts en mode connecté ou en mode non connecté via des canaux de distribution bidirectionnels ou unidirectionnels.

Le mode de la mise à disposition et d'utilisation des contenus concernés varie en fonction du service offert et du réseau support utilisé.

Ces modes sont notamment :
- la diffusion, pour les services de TV live ;
- la diffusion multimédia en continu (streaming), pour les services de vidéo à la demande (VOD) ;
- le téléchargement, pour les services d'achat de programme ;
- la (re)lecture de contenus préalablement reçus et enregistrés localement (PVR, pour Personal Video Recorder).

Les techniques de protection des contenus fournis aux abonnés dépendent de la nature des services exploités pour les distribuer et du type de réseaux supports utilisés pour offrir ces services.

Typiquement, des flux en diffusion (ou streaming), ainsi que des contenus enregistrés dans les mêmes formats que ces flux, peuvent être protégés par des systèmes d'accès conditionnel (ou CAS, pour Conditional Access System), et des fichiers en téléchargement, ainsi que des contenus préalablement obtenus par tout moyen précédemment cité et enregistrés dans le même format que de tels fichiers, peuvent être protégés par des systèmes de gestion de droits numériques (ou DRM, pour Digital Rights Management).

Pour une meilleure compréhension concernant la terminologie propre au domaine des systèmes de CAS, on pourra se reporter au document suivant :
« FUNCTIONAL MODEL OF A CONDITIONAL ACCESS SYSTEM » EBU REVIEW-TECHNICAL EUROPEAN BROADCASTING UNION. BRUSSELS, BE, no 266 21 décembre 1995.

Une présentation détaillée d'un système DRM (par exemple OMA-DRM) est accessible dans les documents cités par le consortium "*Open Mobile Alliance",* tels que :
- "OMA DRM Approved Version 2.0 - 23" (Mars 2007), ou encore
- "OMA DRM Specification V2.0 Draft Version 2.0 - 21" (Juin 2004).

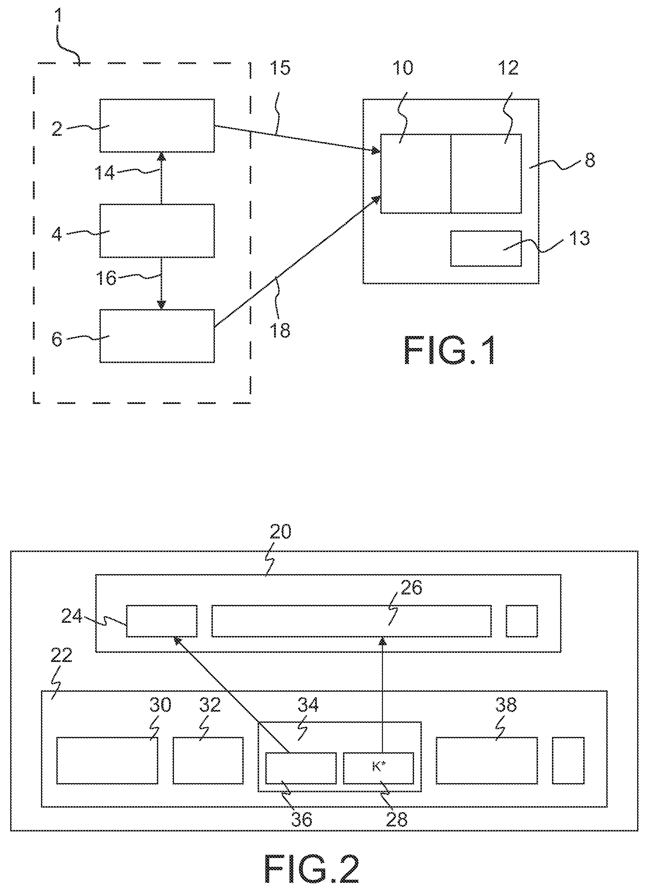

La figure 1 illustre schématiquement un système de distribution de contenus dans lequel est mise en oeuvre la protection de contenu par DRM.

Ce système comporte un opérateur 1 disposant d'un serveur de contenu 2 associé à un module 4 de mise en forme desdits contenus et à un serveur de licences 6, et un équipement récepteur 8 comportant un agent DRM 10, un lecteur/décodeur de contenu 12 et un module 13 de dialogue avec l'utilisateur.

Dans cette architecture, le serveur de contenu 2 reçoit (flèche 14) du module de mise en forme 4 un contenu embrouillé adapté au format DRM et transmet (flèche 15) ce contenu à l'agent DRM 10.

Le serveur de licences 6 reçoit du module de mise en forme 4 (flèche 16) des informations relatives à sécurité du contenu, telles que la clé de déchiffrement (ou de désembrouillage) de ce contenu et transmet (flèche 18) à l'équipement terminal 8 la licence DRM associée au contenu.

Rappelons qu'une licence DRM correspond à la juxtaposition d'informations relatives au contenu, notamment son identifiant et la clé cryptographique permettant de le déchiffrer, et d'informations sur les autorisations et contraintes d'usage du contenu (nombre de lectures, droits de copie, date limite ou durée d'utilisation, bénéficiaire(s) du contenu, etc.). La licence représente notamment le droit d'usage d'un contenu, octroyé au titulaire du terminal.

La figure 2 est une représentation schématique d'un objet contenu 20 (Content Object) et d'un objet droit 22 (Right Object) désignant respectivement un contenu numérique et la licence associée à ce contenu dans le contexte DRM (pour Digital Right management).

L'objet contenu 20 comporte un identifiant du contenu 24 et un document 26 comportant les données (vidéo, audio, etc.) pouvant être déchiffrées par une clé K dont le cryptogramme K* 28 est présent dans l'objet droit 22. Le cryptogramme K* est obtenu par chiffrement de la clé K par une clé Ke qui dépend de l'émetteur du droit et qui est fournie de façon sécurisée au terminal auquel est destiné le contenu.

L'objet droit 22 est une collection de données décrivant la manière dont un contenu numérique peut être utilisé. Par exemple, dans le cas de la spécification « OMA Digital Rights Management » établie par Open Mobile Alliance, l'objet droit est décrit dans un document XML (pour Extensible Markup Language) contenant notamment l'identifiant 30 de ce droit, un attribut 32 (Stateful/Stateless) précisant si le droit se modifie au cours de son utilisation, une ou plusieurs désignations de contenu 34 (Asset) comprenant notamment l'identifiant 36 du contenu (ContentId) et le cryptogramme K* 28 de la clé K. L'objet droit 22 comporte en outre une description 38 de permissions et de contraintes indiquant l'usage qui peut être fait du contenu. Le degré de sécurité du contenu ou de la ressource dépend essentiellement du degré de sécurité de la licence associée à ce contenu, et plus précisément du degré de sécurité de la clé de déchiffrement K.

Dans l'équipement récepteur 8, l'agent DRM 10 évalue le droit de l'usager à accéder au contenu en fonction de la description 38 encapsulée dans la licence DRM. Sous réserve d'une autorisation fournie par l'agent DRM 10, le lecteur de contenu 12 permet l'accès au contenu protégé et rend ce contenu désembrouillé.

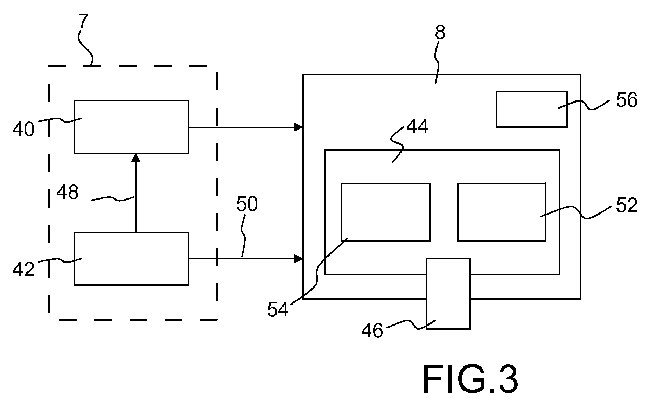

La figure 3 illustre schématiquement une architecture classique d'un système de distribution de contenus protégés par un système d'accès conditionnel CAS.

Des références identiques désigneront les éléments remplissant la même fonction dans les systèmes de la figure 2 et de la figure 3.

Le système illustré par la figure 3 comporte un module 40 de mise en forme desdits contenus auquel est associé un module 42 de gestion d'accès conditionnel. L'équipement récepteur 8 de l'utilisateur comporte dans ce cas un module 44 d'accès conditionnel et un processeur de sécurité 46. Ce processeur de sécurité est notamment destiné à traiter les données de sécurité relatives au système d'accès conditionnel, notamment les messages de contrôle d'accès ECM et EMM introduits ci-dessous. Il peut être externe ou intégré au terminal, et matériel, tel qu'une carte à puce, ou logiciel.

Dans cette architecture, le module 42 génère des messages ECM (pour « Entitlement Control Message ») contenant les conditions d'accès à un contenu et la clé de désembrouillage de celui-ci, usuellement appelée mot de contrôle (CW pour « Control Word ») et transmet ces messages (flèche 48) au module 40 de mise en forme. Ce module embrouille le contenu et lui associe les messages ECM. Le module 42 de gestion d'accès conditionnel génère en outre des messages EMM (pour « Entitlement Management Message ») et transmet ces messages (flèche 50) au terminal 8 pour assurer la gestion des titres d'accès acquis par l'utilisateur. Ainsi les titres d'accès ou les moyens de les acquérir (par exemple des jetons pour l'achat impulsif de programmes) sont gérés et inscrits à distance par l'opérateur 1 dans une mémoire non volatile du processeur de sécurité 46.

Dans l'équipement terminal 8 le module 44 d'accès conditionnel comporte un premier module 52 de traitement des messages ECM et EMM en coopération avec le processeur de sécurité 46. D'autres traitements complémentaires, concernant des fonctions particulières telles que l'achat impulsif d'un programme en PPV (pour « Pay Per View ») qui nécessitent un accord de l'utilisateur, sont gérés par un deuxième module 54 de traitement. Lorsque les conditions d'accès au contenu définies dans les ECM sont remplies, le module 44 d'accès conditionnel fournit au terminal 8 le mot de contrôle CW, permettant à celui-ci de désembrouiller le contenu et de restituer le contenu en clair à l'utilisateur. Le terminal 8 dispose en outre d'un module 56 de dialogue avec l'utilisateur.

La multiplication des services fournis à des terminaux, fixes ou mobiles, et la diversification des contenus fournis dans le cadre de ces services ainsi que l'absence d'une norme unique pour la protection de ces contenus, rendent difficiles l'implémentation et l'interaction, dans un même terminal, de plusieurs techniques de protection de contenus.

Ainsi, la combinaison, dans un même terminal de réception, de techniques distinctes de protection de contenus, se heurte-t-elle à la différence de formats des données traitées par chacune de ces techniques et au type de traitement des données de sécurité spécifique à chacune de ces techniques.

De façon générale, la diversité des techniques de protection de contenus constitue un obstacle à la convergence des services, au sens de leur transparence du point de vue de l'utilisateur.

Le but de l'invention est d'une part d'homogénéiser la protection des contenus dans un même terminal supportant au moins deux techniques de protection de contenus distinctes, et d'autre part de faire bénéficier à l'une de ces techniques, de la sécurité d'une autre, et plus particulièrement de faire bénéficier à une solution de type DRM normalisée du niveau de sécurité élevé d'une solution CAS propriétaire.

Un autre but de l'invention est de faciliter la mise en oeuvre, par l'opérateur, de variations et d'évolutions du procédé de contrôle d'accès utilisé afin de renforcer la protection des contenus.

Le document WO 2005/045554 A décrit une méthode de protection de contenu numérique dans laquelle le contenu est chiffré par une première clé qui est chiffrée à son tour par une deuxième clé, ledit contenu chiffré et ladite première clé sont ensuite diffusés, un droit est ensuite affecté à ladite deuxième clé qui est ensuite transmise avec ce droit à un terminal mobile via un réseau mobile.

Le document EP 1 406 446 A1 décrit une méthode dans laquelle un contenu reçu par un réseau est d'abord traité par un premier circuit pour générer des informations de contrôle puis par un deuxième circuit couplé au premier circuit qui utilise lesdites informations de contrôle pour protéger ledit contenu avant sa distribution dans le réseau.

### EXPOSÉ DE L'INVENTION

Les buts de l'invention sont atteints au moyen d'une combinaison, dans un même terminal, d'au moins deux techniques de protection de contenus.

Plus précisément, ce but est atteint au moyen d'un procédé de contrôle d'accès à un contenu numérique embrouillé par une clé secrète K et distribué par un opérateur muni d'un serveur de contenu et d'un serveur de droit à au moins un terminal de réception comportant une pluralité de modules de contrôle d'accès, chaque module de contrôle d'accès mettant une oeuvre une technique spécifique de détermination de la clé secrète K.

Ce procédé comporte les étapes suivantes :
- le serveur de contenu transmet au terminal (8) le contenu embrouillé,
- le serveur de droit (6, 42) transmet au terminal (8) des données de sécurité D(K) préalablement définies en fonction de la clé secrète K.

Le procédé selon l'invention comporte en outre les étapes suivantes:
- à l'émission, le serveur de droit incorpore dans les données de sécurité D(K) un critère de sélection permettant à l'un au moins des modules de contrôle d'accès parmi les différents modules de contrôle d'accès du terminal de décider de traiter seul les données D (K) pour tenter d'obtenir la clé secrète K, ou d'en transmettre au moins une partie à l'un des autres modules de contrôle d'accès du terminal.
- à la réception desdites données de sécurité D(K) par l'un desdits modules de contrôle d'accès, ledit module de contrôle d'accès :
- analyse les données D(K) pour obtenir ledit critère de sélection et, selon sa valeur,
- termine le traitement des données D(K) pour obtenir la clé secrète K,
- ou transmet une partie ou la totalité desdites données de sécurité D(K) à l'un au moins des autres modules de contrôle d'accès.

Chacune des techniques de protection de contenus mises en jeu peut être un système d'accès conditionnel, ou CAS, ou un système de gestion de droits numériques, ou DRM. Le module de contrôle d'accès afférent est alors, respectivement, un module d'accès conditionnel ou un agent DRM. Dans les deux cas, ce module dispose d'un processus de détermination de la clé K comportant notamment au moins l'évaluation du droit du terminal de réception à désembrouiller le contenu reçu, ou le déchiffrement d'un cryptogramme K* de la clé secrète K, à partir de messages de types ECM et/ou EMM, dans le cas d'un CAS, ou d'une licence DRM, dans le cas d'une DRM.

Dans une première variante de réalisation, ledit critère de sélection est déductible de la syntaxe desdites données de sécurité D(K). Par exemple, de la longueur excessive ou insuffisante d'un champ des données de sécurité D(K), tel que le champ des données cryptographiques, un module de contrôle d'accès peut déduire que ce champ contient des données qui ne sont pas destinées à être traitées par lui.

Dans une deuxième variante de réalisation, ledit critère de sélection est un bit ou un groupe de bits parmi les données de sécurité D(K). Par exemple, un champ de ces données est consacré à un identifiant de la technique de détermination de la clé K à appliquer.

Préférentiellement, le contenu embrouillé et les données de sécurité sont transmis au terminal respectivement par le serveur de contenus et par le serveur de droit simultanément ou de façon décalée dans le temps.

Dans un premier mode de réalisation, les données de sécurité D(K) comportent au moins un ECM et/ou au moins une licence DRM.

Dans une variante de ce mode de réalisation, le message ECM est encapsulé dans la licence DRM.

Dans une autre variante, ledit ensemble de données de sécurité D(K) comporte en outre un message EMM destiné à mettre à jour ou à inscrire une clé ou un titre d'accès dans une mémoire non volatile dudit terminal.

Selon une autre caractéristique de l'invention, lesdites données de sécurité D(K) sont chiffrées totalement ou partiellement.

L'invention permet ainsi de pallier l'hétérogénéité des systèmes de protection de contenus utilisés due à la diversité des services exploités pour fournir un contenu.

Elle permet également à l'opérateur d'effectuer des variations et des évolutions du système de protection de contenus utilisé afin de renforcer la protection des contenus.

Le procédé selon l'invention est mis en oeuvre par un système de contrôle d'accès à un contenu numérique embrouillé fourni par un opérateur à un terminal de réception comportant une pluralité de modules de contrôle d'accès distincts, chaque module de contrôle d'accès mettant en oeuvre une technique spécifique de détermination de la clé secrète K, ledit système comportant:
- un serveur de contenu comprenant des moyens pour embrouiller le contenu par une clé secrète K,
- un serveur de droit comprenant des moyens pour calculer des données de sécurité D(K) en fonction de la clé secrète K.

Le système selon l'invention se caractérise par le fait que:
- le serveur de droit comporte en outre des moyens pour incorporer dans les données de sécurité D(K) un critère de sélection permettant à l'un au moins des modules de contrôle d'accès parmi les différents modules de contrôle d'accès du terminal de décider de traiter seul les données D(K) pour tenter d'obtenir la clé secrète K, ou d'en transmettre au moins une partie à l'un des autres modules de contrôle d'accès du terminal.

Le terminal de réception du contenu embrouillé par la clé secrète K fourni par l'opérateur comporte une pluralité de modules de contrôle d'accès distincts chacun mettant en oeuvre une technique spécifique de détermination de ladite clé secrète K. Ce terminal reçoit en outre dudit opérateur des données de sécurité D(K) comportant un critère de sélection d'un module de contrôle parmi la pluralité de modules de contrôle d'accès du terminal.

Ce terminal se caractérise en ce que l'un desdits modules de contrôle d'accès comporte des moyens pour analyser ledit critère de sélection de manière à décider de traiter seul les données D(K) pour tenter d'obtenir la clé secrète K, ou d'en transmettre au moins une partie à l'un des autres modules de contrôle d'accès du terminal.

Dans un mode particulier de réalisation, le terminal selon l'invention comporte deux modules de contrôle d'accès, dans lequel le premier module est un agent DRM (Digital Rights Management) et le deuxième module est un module d'accès conditionnel, et une carte à puce comme processeur de sécurité.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1, décrite précédemment, illustre schématiquement un système de distribution de contenus dans lequel est mise en oeuvre une technique de protection de contenus de type DRM,
- la figure 2, décrite précédemment, est une représentation schématique d'un objet contenu (Content Object) et d'un objet droit (Right Object) désignant respectivement un contenu numérique et une licence associée à ce contenu dans le contexte d'une technique de protection de contenus de type DRM,
- la figure 3, décrite précédemment, illustre schématiquement une architecture classique d'un système de distribution de contenus dans lequel est mise en oeuvre une technique de protection de contenus de type CAS,
- la figure 4 représente un schéma bloc général d'un exemple particulier de système selon l'invention,
- la figure 5 illustre schématiquement un exemple particulier de mise en oeuvre du procédé selon l'invention dans le système de la figure 4,
- la figure 6 est un organigramme illustrant les étapes du procédé selon l'invention.

### EXPOSÉ DÉTAILLÉ DE MODES DE RÉALISATION PARTICULIERS

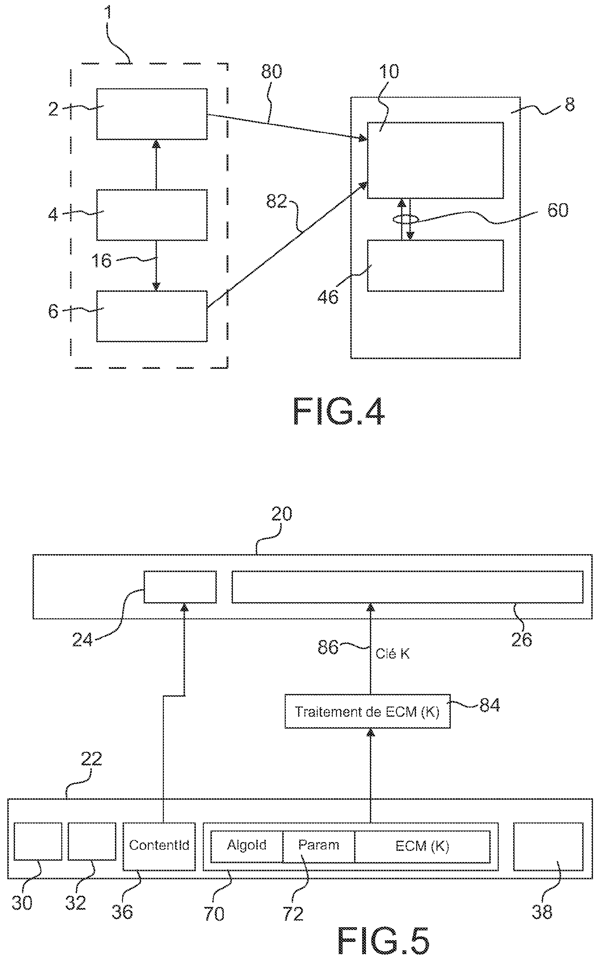

L'invention va maintenant être décrite, par référence aux figures 4, 5 et 6, dans un exemple de réalisation dans lequel un contenu numérique représentant des données ou des programmes audiovisuels embrouillés par une clé secrète K est fourni par un opérateur 1 à un terminal de réception 8 supportant une technique de protection basée sur la norme OMA DRM (Open Mobile Alliance, Digital Right Management) et une technique de protection basée sur un CAS (Conditional Access System).

Bien entendu, l'invention n'est pas limitée au contexte décrit ci-dessus et s'applique quelles que soient les techniques de protection de contenu utilisées.

Dans la suite de cette description, des références identiques désigneront les éléments communs aux figures de l'art antérieur et aux figures illustrant l'invention.

En référence à la figure 4, l'opérateur 1 dispose d'un serveur de contenu 2 associé à un module 4 de mise en forme desdits contenus et à un serveur de licences 6.

Le terminal 8 comporte deux modules de contrôle d'accès, le premier est un agent DRM 10 conforme à la norme OMA DRM, communiquant via une interface 60 avec le deuxième qui est un module d'accès conditionnel 46, comportant un processeur de sécurité, tel qu'une carte à puce, contenant des titres d'accès au contenu embrouillé. Ledit processeur de sécurité peut être implémenté sous forme logicielle sans sortir du cadre de l'invention.

Préalablement à la fourniture du contenu au terminal 8, le module 4 de mise en forme génère des données spécifiques à la technique DRM, illustrées schématiquement par la figure 5, comportant un objet contenu 20 (Content Object) et un objet droit 22 (Right Object) appelé usuellement licence.

L'objet contenu 20 comporte un identifiant du contenu 24 et un document 26 comportant les données (vidéo, audio, etc.) chiffrées par la clé K.

L'objet droit 22 constitue les données de sécurité D(K) et comporte notamment l'identifiant 30 de ce droit, un attribut 32 (Stateful/Stateless) précisant si le droit se modifie au cours de son utilisation, l'identifiant 36 du contenu associé à cette licence, une description 38 de permissions et de contraintes indiquant l'usage qui peut être fait du contenu, et des données cryptographiques 70, contenant au moins la clé K.

Dans l'exemple de réalisation décrit, ces données cryptographiques 70 comprennent un ECM comportant le cryptogramme K* de la clé K et au moins une condition d'accès, un identifiant AlgoId de l'algorithme de traitement de l'ECM par le processeur de sécurité 46, et des paramètres Param 72 nécessaires à l'exécution de l'algorithme désigné par l'identifiant AlgoId.

Les données cryptographiques 70 peuvent en plus comporter un message EMM interprétable par le processeur de sécurité 46 permettant par exemple de mettre à jour ou inscrire une clé ou un titre d'accès dans la mémoire non volatile du terminal.

En fonctionnement, préalablement à l'émission du contenu, le serveur de licence incorpore dans les données de sécurité D(K) un critère de sélection permettant à l'un au moins des modules de contrôle d'accès (10,46) parmi les différents modules de contrôle d'accès du terminal 8 de décider de traiter seul les données D(K) pour tenter d'obtenir la clé secrète K, ou d'en transmettre au moins une partie à l'un des autres modules de contrôle d'accès du terminal.

Ledit critère de sélection est soit déductible de la syntaxe desdites données de sécurité D(K), soit un bit ou un groupe de bits parmi les données de sécurité D(K).

Dans le mode de réalisation décrit, ledit critère de sélection est la valeur de l'identifiant AlgoId de l'algorithme de traitement de l'ECM.

Le serveur de contenus 2 transmet le contenu embrouillé au terminal 8 (flèche 80) et, le serveur de licences 6 transmet la licence DRM décrite à la figure 5 au terminal 8 (flèche 82).

Ces transmissions peuvent être simultanées ou décalées dans le temps.

Au niveau du terminal, pour déchiffrer le contenu embrouillé, l'agent DRM 10 traite la structure de données de sécurité 70.

Par la valeur particulière de l'identifiant AlgoId, il détecte que la licence ne contient pas le cryptogramme de la clé K comme usuellement mais un ensemble de données, typiquement un message ECM, destiné à la technique CAS avec laquelle il coopère. L'agent DRM exécute alors l'algorithme désigné par l'identifiant AlgoId, avec les paramètres Param 72, pour extraire l'ECM de la licence DRM. Une fois l'ECM extrait, il est transmis par l'agent DRM 10, via l'interface 60, au processeur de sécurité 46. Ce dernier, de façon connue en soi, traite l'ECM (bloc 84, figure 5), c'est-à-dire vérifie que les conditions d'accès contenues dans l'ECM sont satisfaites et déchiffre le cryptogramme K* si ces conditions d'accès sont satisfaites par au moins un titre d'accès, puis renvoie (flèche 86, figure 5) la clé K extraite de l'ECM à l'agent DRM 10. Ce dernier utilise cette clé pour désembrouiller le contenu.

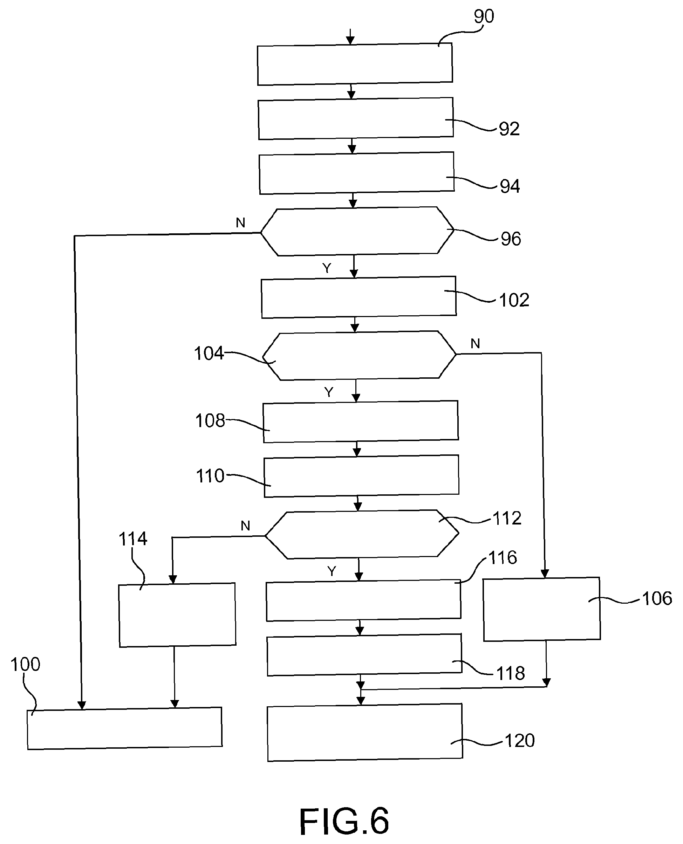

Les étapes essentielles du procédé selon l'invention vont maintenant être décrites en référence à la figure 6.

A l'étape 90, le terminal reçoit le contenu embrouillé et la licence DRM associée à ce contenu.

Notons que l'obtention du contenu protégé et l'obtention de la licence peuvent se faire dans un ordre quelconque.

A l'étape 92, l'utilisateur demande l'accès au contenu. A l'étape 94, l'agent DRM détermine la licence associée à ce contenu, éventuellement avec un dialogue complémentaire avec l'utilisateur pour choisir une licence parmi plusieurs possibles.

A l'étape 96, l'agent DRM 10 vérifie la syntaxe, l'intégrité et l'authenticité de la licence DRM, ainsi que les autorisations et contraintes 38 conditionnant l'accès au contenu.

Si la licence présente une anomalie ou si ces autorisations et contraintes 38 ne sont pas satisfaites, l'agent DRM 10 refuse l'accès au contenu à l'étape 100.

Si la licence est correcte et si les autorisations et contraintes 38 sont satisfaites, l'agent DRM 10 extrait les données relatives à la clé K de déchiffrement du contenu (étape 102).

A l'étape 104, l'agent DRM 10 analyse l'identifiant de l'algorithme AlgoId et détecte notamment si les données relatives à la clé K extraites à l'étape 102 sont à fournir au système CAS.

Si ce n'est pas le cas, le cryptogramme K* est déchiffré par l'agent DRM 10 à l'étape 106 selon le procédé usuel propre à la technique DRM.

Si c'est le cas, les données extraites à l'étape 102 constituent un ECM et à l'étape 108, l'agent DRM 10 transmet cet ECM au module d'accès conditionnel. Le processeur de sécurité 46 associé à ce dernier traite à l'étape 110 l'ECM reçu et vérifie, à l'étape 112, si le message ECM est correct et si la condition d'accès contenue dans cet ECM est satisfaite par au moins un titre d'accès présent dans le processeur de sécurité 46.

Dans la négative, à l'étape 114, le processeur de sécurité 46 envoie un message d'erreur à l'agent DRM 10. Ce dernier refuse alors l'accès au contenu à l'étape 100.

Dans l'affirmative, à l'étape 116, le processeur de sécurité 46 déchiffre le cryptogramme K* présent dans l'ECM, et le module d'accès conditionnel transmet, à l'étape 118, la clé K à l'agent DRM via l'interface 60.

A l'étape 120, l'agent DRM 10 désembrouille le contenu au moyen de la clé K.

## Revendications

1. Procédé de contrôle d'accès à un contenu numérique embrouillé par une clé secrète K et distribué par un opérateur muni d'un serveur de contenu (2) et d'un serveur de droit (6, 42) à au moins un terminal de réception (8) comportant une pluralité de modules de contrôle d'accès (10,46), chaque module de contrôle d'accès mettant en oeuvre une technique spécifique de détermination de la clé secrète K, procédé dans lequel:
- le serveur de contenu (2) transmet au terminal (8) le contenu embrouillé,
- le serveur de droit (6, 42) transmet au terminal (8) des données de sécurité D(K) préalablement définies en fonction de la clé secrète K,
- préalablement à l'émission, le serveur de droit incorpore dans les données de sécurité D(K) un critère de sélection dépendant de la syntaxe desdites données de sécurité D(K) et permettant à l'un au moins des modules de contrôle d'accès (10, 46) parmi les différents modules de contrôle d'accès du terminal (8) de décider de traiter seul les données D(K) pour tenter d'obtenir la clé secrète K, ou d'en transmettre au moins une partie à l'un des autres modules de contrôle d'accès du terminal,
- à la réception desdites données de sécurité D(K) par l'un desdits modules de contrôle d'accès (10, 46), ledit module de contrôle d'accès :
- analyse les données D(K) pour obtenir ledit critère de sélection et, selon sa valeur,
- termine le traitement des données D(K) pour obtenir la clé secrète K,
- ou transmet une partie ou la totalité desdites données de sécurité D(K) à l'un au moins des autres modules de contrôle d'accès.

2. Procédé selon la revendication 1 dans lequel ledit critère de sélection est un bit ou un groupe de bits parmi les données de sécurité D(K).

3. Procédé selon la revendication 1 dans lequel le contenu embrouillé et les données de sécurité sont transmis au terminal respectivement par le serveur de contenu (2) et par le serveur de droit (6) simultanément ou de façon décalée dans le temps.

4. Procédé selon la revendication 1 dans lequel les données de sécurité D(K) comportent au moins un ECM et/ou au moins une licence DRM.

5. Procédé selon la revendication 4 dans lequel le message ECM est encapsulé dans la licence DRM.

6. Procédé selon la revendication 1 dans lequel ledit ensemble de données de sécurité D(K) comporte en outre un message EMM destiné à mettre à jour ou à inscrire une clé ou un titre d'accès dans une mémoire non volatile dudit terminal.

7. Procédé selon la revendication 1, dans lequel les données de sécurité D(K) sont chiffrées totalement ou partiellement.

8. Système de contrôle d'accès à un contenu numérique embrouillé fourni par un opérateur à un terminal (8) de réception comportant une pluralité de modules de contrôle d'accès (10, 46) distincts, chaque module de contrôle d'accès mettant en oeuvre une technique spécifique de détermination de la clé secrète K, ledit système comportant:
- un serveur de contenu (2) comprenant des moyens pour embrouiller le contenu par une clé secrète K,
- un serveur de droit comprenant des moyens pour calculer des données de sécurité D(K) en fonction de la clé secrète K,
et comportant en outre des moyens pour incorporer dans les données de sécurité D(K) un critère de sélection dépendant de la syntaxe desdites données de sécurité D(K) et permettant à l'un au moins des modules de contrôle d'accès parmi les différents modules de contrôle d'accès du terminal (8) de décider de traiter seul les données D(K) pour tenter d'obtenir la clé secrète K, ou d'en transmettre au moins une partie à l'un des autres modules de contrôle d'accès du terminal.

9. Terminal (8) de réception d'un contenu embrouillé par une clé secrète K fourni par un opérateur, ledit terminal comportant une pluralité de modules de contrôle d'accès (10, 46) distincts, chacun mettant en oeuvre une technique spécifique de détermination de ladite clé secrète K, ledit terminal recevant en outre dudit opérateur des données de sécurité D(K) comportant un critère de sélection d'un module de contrôle d'accès parmi la pluralité de modules de contrôle d'accès du terminal (8), ledit critère de sélection étant dépendant de la syntaxe desdites données de sécurité D(K), et l'un desdits modules de contrôle d'accès comportant des moyens pour analyser ledit critère de sélection de manière à décider de traiter seul les données D(K) pour tenter d'obtenir la clé secrète K, ou d'en transmettre au moins une partie à l'un des autres modules de contrôle d'accès du terminal.

10. Terminal selon la revendication 9 comportant deux modules de contrôle d'accès (10, 46), dans lequel le premier module (10) est un agent DRM (Digital Rights Management) et le deuxième module (46) est un module d'accès conditionnel.

11. Terminal selon la revendication 10 comportant une carte à puce comme processeur de sécurité.

12. Programme d'ordinateur enregistré sur un support et destiné, lorsqu'il est exécuté par un ordinateur, à mettre en oeuvre le procédé selon l'une des revendications 1 à 7 dans un terminal selon l'une des revendications 9 à 11.

## Patentansprüche

1. Verfahren zur Steuerung des Zugangs zu einem verwürfelten digitalen Inhalt durch einen geheimen Schlüssel K, der durch einen Bediener, welcher mit einem Inhaltsserver (2) und mit einem Rechteserver (6, 42) ausgestattet ist, an wenigstens ein Empfangsterminal (8) verteilt wird, das eine Mehrzahl von Zugangssteuerungsmodulen (10, 46) umfasst, wobei jedes Zugangssteuerungsmodul eine spezifische Technik zur Bestimmung des geheimen Schlüssels K verwendet, bei welchem Verfahren:
- der Inhaltsserver (2) an das Terminal (8) den verwürfelten Inhalt überträgt,
- der Rechteserver (6, 42) an das Terminal (8) Sicherheitsdaten D (K) übertragt, die zuvor als Funktion des geheimen Schlüssels K definiert wurden,
- der Rechteserver vor dem Aussenden in die Sicherheitsdaten D (K) ein Auswahlkriterium einfügt, das von der Syntax der Sicherheitsdaten D (K) abhängt und wenigstens einem der Zugangssteuerungsmodule (10, 46) aus den verschiedenen Zugangssteuerungsmodulen des Terminals (8) die Entscheidung ermöglicht, nur die Daten D (K) zu verarbeiten, um zu versuchen, den geheimen Schlüssel K zu erhalten, oder wenigstens einen Teil hiervon an eines der anderen Zugangssteuerungsmodule des Terminals zu übertragen,
- beim Empfang der Sicherheitsdaten D (K) durch eines der Zugangssteuerungsmodule (10, 46) das Zugangssteuerungsmodul:
- die Daten D (K) analysiert, um das Auswahlkriterium zu erhalten, und abhängig von seinem Wert,
- die Verarbeitung der Daten D (K) beendet, um den geheimen Schlüssel K zu erhalten,
- oder einen Teil oder die Gesamtheit der Sicherheitsdaten D (K) an wenigstens eines der anderen Zugangssteuerungsmodule überträgt.

2. Verfahren nach Anspruch 1, bei dem das Auswahlkriterium ein Bit oder eine Gruppe von Bits aus den Sicherheitsdaten D (K) ist.

3. Verfahren nach Anspruch 1, bei dem der verwürfelte Inhalt und die Sicherheitsdaten an das Terminal durch den Inhaltsserver (2) beziehungsweise durch den Rechteserver (6) gleichzeitig oder in zeitlich versetzter Weise übertragen werden.

4. Verfahren nach Anspruch 1, bei dem die Sicherheitsdaten D (K) wenigstens ein ECM und/oder wenigstens eine DRM-Lizenz umfassen.

5. Verfahren nach Anspruch 4, bei dem die ECM-Nachricht in die DRM-Lizenz eingefügt ist.

6. Verfahren nach Anspruch 1, bei dem die Gesamtheit von Sicherheitsdaten D (K) ferner eine EMM-Nachricht umfasst, die dazu ausgelegt ist, einen Schlüssel oder einen Zugangstitel in einem nicht volatilen Speicher des Terminals zu aktualisieren oder einzuschreiben.

7. Verfahren nach Anspruch 1, bei dem die Sicherheitsdaten D (K) vollständig oder teilweise chiffriert sind.

8. System zur Steuerung des Zugangs zu einem verwürfelten digitalen Inhalt, der von einem Bediener an ein Empfangsterminal (8) geliefert wird, umfassend eine Mehrzahl von verschiedenen Zugangssteuerungsmodulen (10, 46), wobei jedes Zugangssteuerungsmodul eine spezifische Technik zur Bestimmung des geheimen Schlüssels K verwendet, wobei das System umfasst:
- einen Inhaltsserver (2), umfassend Mittel zum Verwürfeln des Inhalts mittels eines geheimen Schlüssels K,
- einen Rechteserver, umfassend Mittel zum Berechnen von Sicherheitsdaten D (K) als Funktion des geheimen Schlüssels K,
und ferner umfassend Mittel zum Einfügen, in die Sicherheitsdaten D (K), eines Auswahlkriteriums, das von der Syntax der Sicherheitsdaten D (K) abhängt und wenigstens einem der Zugangssteuerungsmodule aus den verschiedenen Zugangssteuerungsmodulen des Terminals (8) die Entscheidung ermöglicht, nur die Daten D (K) zu verarbeiten, um zu versuchen, den geheimen Schlüssel K zu erhalten, oder wenigstens einen Teil hiervon an eines der anderen Zugangssteuerungsmodule des Terminals zu übertragen.

9. Terminal (8) zum Empfang von Inhalt, der durch einen geheimen Schlüssel K verwürfelt ist, der von einem Bediener geliefert wird, umfassend eine Mehrzahl von verschiedenen Zugangssteuerungsmodulen (10, 46), von denen jedes eine spezifische Technik zur Bestimmung des geheimen Schlüssels K verwendet, wobei das Terminal ferner von dem Bediener Sicherheitsdaten D (K) empfängt, die ein Kriterium zur Auswahl eines Zugangssteuerungsmoduls aus der Mehrzahl von Zugangssteuerungsmodulen des Terminals (8) umfassen, wobei das Auswahlkriterium von der Syntax der Sicherheitsdaten D (K) abhängt, und das eine der Zugangssteuerungsmodule Mittel umfasst zum Analysieren des Auswahlkriteriums derart, dass entschieden wird, nur die Daten D (K) zu verarbeiten, um zu versuchen, den geheimen Schlüssel K zu erhalten, oder wenigstens einen Teil hiervon an eines der anderen Zugangssteuerungsmodule des Terminals zu übertragen.

10. Terminal nach Anspruch 9, umfassend zwei Zugangssteuerungsmodule (10, 46), wobei das erste Modul (10) ein DRM-Agent (Digital Rights Management) ist, und das zweite Modul (46) ein Konditionalzugangsmodul ist.

11. Terminal nach Anspruch 10, umfassend eine Chipkarte als Sicherheitsprozessor.

12. Computerprogramm, das auf einem Träger gespeichert und dazu ausgelegt ist, dann, wenn es von einem Computer ausgeführt wird, das Verfahren nach einem der Ansprüche 1 bis 7 in einem Terminal nach einem der Ansprüche 9 bis 11 auszuführen.

## Claims

1. A method for controlling access to a digital content scrambled by a secret key K and distributed by an operator, said operator being equipped with a content server (2) and a rights server (6, 42), to at least one receiving terminal (8) comprising a plurality of access-control modules (10, 46), each access-control module implementing a specific technology for determining the secret key K,
a method in which:
- the content server (2) transmits the scrambled content to the terminal (8),
- the rights server (6, 42) transmits to the terminal (8) the security data D(K) previously defined according to the secret key K,
- prior to broadcasting, the licence server incorporates into the security data D(K) a selection criterion which depends on the syntax of said data permitting at least one of the access-control modules (10, 46) among the terminal's (8) different access-control modules to decide to process the data D(K) alone in order to attempt to obtain the secret key K or to transmit at least a portion of the data to one of the terminal's other access-control modules.
- when one of said access-control modules (10, 46) receives said security data D(K), said access-control module:
- analyses the data D(K) to obtain said selection criterion and, based on its value,
- terminates the data D(K) processing in order to obtain the secret key K,
- or transmits a portion or the totality of said security data D(K) to at least one of the other access-control modules.

2. A method according to claim 1 in which said selection criterion is a bit or a group of bits among the security data D(K).

3. A method according to claim 1 in which the scrambled content and the security data are respectively transmitted to the terminal by the content server (2) and by the rights server (6) simultaneously or asynchronously.

4. A method according to claim 1 in which the security data D(K) comprise at least one ECM and/or at least one DRM licence.

5. A method according to claim 4 in which the ECM message is encapsulated in the DRM licence.

6. A method according to claim 1 in which said security data set D(K) moreover comprises an EMM message intended to update or register a key or an access right into a non-volatile storage device of said terminal.

7. A method according to claim 1 in which the security data D(K) are entirely or partially encrypted.

8. System for controlling access to a scrambled digital content supplied by an operator to a receiving terminal (8) having a plurality of separate access-control modules (10, 46), each access-control module implementing a specific technology for determining the secret key K, said system comprising:
- a content server (2) having means to scramble the content by means of a secret key K,
- a rights server having means to calculate the security data D(K) according to the secret key K, said system and further comprising:
means for incorporating into the security data D(K) a selection criterion which depends on the syntax of said data permitting at least one of the access-control modules among the different access-control modules of the terminal (8) to decide to process the data D(K) alone in order to attempt to obtain the secret key K or to transmit at least a portion of the data to one of the terminal's other access-control modules.

9. Receiving terminal (8) for receiving from an operator a scrambled content by means of a secret key K, said terminal having a plurality of separate access-control modules (10, 46), each access-control module implementing a specific technology for determining said secret key K, and said terminal furthermore receiving from said operator security data D(K) comprising a selection criterion for selecting one access-control module from among the plurality of the terminal's (8) access-control modules, said selection criterion depends on the syntax of said data:
one of said access-control modules comprises means for analysing said selection criterion so as to determine whether to process the data D(K) alone in order to attempt to obtain the secret key K or to transmit at least a portion of the data to one of the terminal's other access-control modules.

10. A terminal according to claim 9, said terminal comprising two access-control modules (10, 46), wherein the first module (10) is a DRM (digital rights management) agent and the second module (46) is a conditional-access module.

11. A terminal according to claim 10 comprising a smart card as a security processor.

12. A computer program recorded on a medium and, when run by a computer, intended to implement the method according to one of claims 1 to 7 in a terminal according to one of claims 9 to 11.
